# EUROPÄISCHE PATENTSCHRIFT

(11) **EP 0 791 163 B1**
(45) Veröffentlichungstag und Bekanntmachung des Hinweises auf die Patenterteilung: **03.05.2000**
(21) Anmeldenummer: 95936500.8
(22) Anmeldetag: 16.10.1995
(51) Int. Cl.: F28D 20/02

(54) **HEIZKÖRPER**
HEATER
ELEMENT CHAUFFANT

(30) Priorität: 07.11.1994 DE 9417820 U; 02.12.1994 DE 9419296 U
(43) Veröffentlichungstag der Anmeldung: 27.08.1997
(73) Patentinhaber: Schümann Sasol GmbH, 20457 Hamburg (DE)
(72) Erfinder: FIEBACK, Klaus, D-10369 Berlin (DE); KUTZKER, Lutz, D-15517 Fürstenwalde (DE)
(74) Vertreter: Müller, Enno, Dipl.-Ing.
(86) Internationale Anmeldenummer: EP9504053
(87) Internationale Veröffentlichungsnummer: WO9614550

(56) Entgegenhaltungen:
- EP-A- 0 109 043
- DE-A- 4 402 062
- FR-A- 2 308 677
- GB-A- 2 143 025
- PATENT ABSTRACTS OF JAPAN vol. 13 no. 335 (M [856] ,27.Juli 1989 & JP,A,01 114632 (MATSUSHITA ELECTRIC WORKS LTD) 8.Mai 1989,

## Beschreibung

Die Erfindung betrifft einen Heizkörper zur Anbringung in einem Wohnraum, mit einer Konvektionsfläche und, bspw. im Falle eines Heizkörpers für eine Warmwasserheizung, mit einer einer Einström- und einer Ausströmöffnung aufweisenden Wasserkammer, und einer gesonderten, abgeschlossenen Speicherkammer, in welcher sich ein Latentwärmespeichermedium befindet, wobei die Speicherkammer zu dem Heizkörper so beabstandet ist, daß sie in einem Strahlungswärmeaustausch mit dem Heizkörper steht.

Ein derartiger Heizkörper ist bereits in der nicht vorveröffentlichten deutschen Patentanmeldung P 44 02 062.7 beschrieben.

Aus der GB-A 2 143 025 ist weiterhin ein Wärme- oder Kältespeicher unter Ausnutzung des chemischen Phasenwechsels von beispielsweise Magnesiumnitrat oder Chlor-Hexahydrat bekannt, der im wesentlichen aus zueinander beabstandeten und mit einem Wärmetransferfluid durchströmten Kammern und einem zwischen diesen Kammern befindlichen Aufnahmeraum für Phasenwechselmaterial gebildet ist. Es wird vorgeschlagen, das Phasenwechselmaterial entweder direkt oder durch Aufheizung des Wärmetransferfluids aufzuheizen. Weiter wird vorgeschlagen, daß der Wärmespeicher mit einem Raumheizkörper in der Weise verbunden ist, daß das Wärmetransferfluid des Heizkörpers durch das Phasenwechselmaterial aufgeheizt wird. Die vorgenannte Schrift offenbart außerdem ein Wärmeaustauschverfahren zwischen einem derartigen Wärmespeicher und einer Befüllung, wobei ein erstes Wärmetransferfluid bei etwa Schmelztemperatur des Phasenwechselmediums durch den Wärmespeicher zirkuliert und an einem anderen Ort mit einem zweiten Wärmetransferfluid einer niedrigeren Temperatur in Wärmeaustausch steht.

Die Erfindung beschäftigt sich mit dem technischen Problem, einen Heizkörper für eine Hausheizung energiesparend, jedoch mit hohem Behaglichkeitswert auszubilden.

Diese technische Problematik ist beim Gegenstand des Anspruches 1 gelöst, wobei darauf abgestellt ist, daß das Latentwärmespeichermaterial eine Phasenübergangstemperatur aufweist von bspw . 30° C, die deutlich unterhalb einer üblichen Betriebstemperatur des Heizkörpers von bspw. 60° C liegt. Bekanntlich empfiehlt es sich, einen Latentwärmespeicher im Bereich seiner Phasenübergangstemperatur zu betreiben. Die hier in Rede stehende Speicherkammer wird mithin in einem solchen Abstand zu dem Heizkörper bzw. mit einer solchen Menge an Latentwärmespeichermaterial ausgestattet, daß trotz dem Strahlungsaustausch mit dem Heizkörper höherer Temperatur der Bereich der Phasenübergangstemperatur nicht wesentlich überschritten wird. Ein quasi statischer Zustand des ständigen Schmelzens und Erstarrens stellt sich dadurch ein, daß vom Speicherelement aufgenommene Wärme zu großen Teilen auch wieder zurückgestrahlt bzw. an die Umgebung abgegeben wird. Eine wandseitig an dem Speicherelement zusätzlich angeordnet Wärmedämmung, auch in Form einer zusätzlichen Latentwärmespeicherschicht mit höherer Schmelztemperatur verhindert zudem die Abstrahlverluste auch in niedrigerem Temperaturniveau. Die Speicherkammer ist nicht unmittelbar auf die Wand aufgebracht, sondern in einem gewissen Abstand zu dieser angeordnet ist. Dies, um die Temperatur in der Wand - jedenfalls soweit es sich um eine Außenwand handelt - nicht unzulässig anzuheben. Soweit im Rahmen dieser Anmeldung beschrieben ist, daß die Speicherkammer im Strahlungswärmeaustausch mit dem Heizkörper steht, ist dies dahin zu verstehen, daß auch zusätzlich noch ein Konvektionswärmeaustausch gegeben sein kann oder sich ausbilden kann. Dadurch, daß die Speicherkammer eine Betriebstemperatur aufweist, die deutlich unterhalb derjenigen des Heizkörpers liegt, wird die Wärme, die von dem Heizkörper auf die Speicherkammer abgestrahlt wird, dort gleichsam in eine Wärme der Betriebstemperatur der Speicherkammer transformiert und von der Speicherkammer sodann auch wieder in diesem - abgesenkten - Temperaturniveau abgestrahlt. In einer Ausführungsform empfiehlt es sich, die Speicherkammer an der Wand bzw. auch beabstandet zur Wand wandseitig bezüglich des Heizkörpers anzuordnen. Der Strahlungswärmeausaustausch der Wand mit dem Heizkörper wird entsprechend durch die zwischengeschaltete Speicherkammer entgegengewirkt. Der Wärmeübergang bzw. die treibende Temperaturdifferenz zwischen der Speicherkammer und der Wand ist entsprechend dem Temperaturniveau der Speicherkammer abgesenkt, so daß die Verluste vermindert sind. Im Sinne der Behaglichkeitsforderung kommt hinzu, daß die Abstrahlung im unteren Temperaturbereich, wie sie die Speicherkammer aufweist, als behaglicher empfunden wird als eine Abstrahlung in einem höheren Temperaturbereich. In Ausgestaltung der Erfindung kann alternativ oder zusätzlich zu der Anordnung der Speicherkammer wandseitig bezüglich des Heizkörpers auch vorgesehen sein, daß die Speicherkammer raumseitig bezüglich des Heizkörpers angeordnet ist. Darüber hinaus kann die Speicherkammer auch ganz oder teilweise oberhalb oder unterhalb des Heizkörpers angeordnet sein. In diesem Fall ist auch bevorzugt, daß in der Speicherkammer ein Metallgitter enthalten ist, zur besseren Durchleitung der Wärme durch die gesamte Speicherkammer oder ein Wärmetransportmittel, bei Einstellung eines Über- oder Unterdrucksystems. Das Wärmetransportmittel kann beispielswiese Wasser sein oder auch Ölanteile. Der Über- oder Unterdruck wird gering gewählt. Darüber hinaus kann auch vorgesehen sein, daß die Speicherkammer formmäßig an den Heizkörper angepaßt ist oder auch eine hiervon abweichende Formgestaltung aufweist. Wenn bspw. der Heizkörper als üblicher Plattenheizkörper oder Flachheizkörper ausgebildet ist, kann die Speicherkammer gleichwohl, insbesondere wenn sie raumseitig bezüglich des Heizkörpers angeordnet ist, winkelartig oder sphärisch gewölbt ausgebildet sein. Ein weiterer Gedanken der Erfindung betrifft die Ausbildung der Speicherkammer aus einem transparenten Material. Dies erlaubt zum einen nicht nur eine optische Überwachung, ob der Heizkörper und damit auch die Speicherkammer im optimalen Temperaturbereich betrieben werden, sondern ist darüber hinaus auch mit interessanten optischen Effekten verbunden. Letzteres insbesondere dann, wenn, wie weiter bevorzugt vorgesehen, das Latentwärmespeichermaterial so zusammengesetzt oder ausgewählt ist, daß bei dem durch das Volumen, den Strahlungsaustausch und den Abstand der Speicherkammer zu dem Heizkörper gegebenen Betriebstemperaturniveau ein Teil des Latentwärmespeichermaterials im geschmolzenen Zustand vorliegt, ein anderer Teil dagegen noch im kristallinen, festen Zustand. In diesem Zusammenhang empfiehlt sich auch insbesondere die Zusammensetzung des Latentwärmespeichermaterials auf Paraffinbasis aus Anteilen unterschiedlicher Phasenübergangstemperatur , wie dies gleichfalls in der weiter oben bereits erwähnten, nicht vorveröffentlichten Patentanmeldung offenbart ist. Im Hinblick auf die optischen Effekte geht eine weitere Lehre der Erfindung dahin, das Latentwärmespeichermaterial einzufärben. Bei transparenter Ausbildung der Speicherkammer können so, in Abhängigkeit des verfestigten oder geschmolzenen Zustandes des Latentwärmespeichermaterials und in Abhängigkeit der Anteile des Latentwärmespeichermaterials, die bei der üblichen Betriebstemperatur der Speicherkammer geschmolzen bzw. fest sind, sehr wirkungsvolle optische Effekte erzielt werden. Diese vergrößern die Bedeutung einer solchen Speicherkammer, auch mit zugeordnetem Heizkörper, für den Wohnbereich in Sinne eines "Heizmöbels". Im Hinblick auf die vorstehend angesprochene und erläuterte relativ niedrige Betriebstemperatur von beispielsweise 30° in der Speicherkammer ist es natürlich im einzelnen noch erforderlich, die Wärmekapazität (Menge des Latentwärmespeichermaterials) so zu wählen, daß sich im Hinblick auf einen vorgegebenen Abstand der Speicherkammer zu dem Heizkörper im stationären Betrieb, wenn der Heizkörper im Bereich seiner Auslegungstemperatur betrieben wird, eben die Betriebstemperatur von ca. 30° in der Speicherkammer einstellt. In diesem Zusammenhang ist es auch möglich, daß die Speicherkamer unmittelbar aufliegend bzw. angrenzend an den Heizkörper angeordnet ist. Gleichwohl kann sich bei geeigneter Wahl der Wärmekapazität in der Speicherkammer (nur) die angesprochene Temperatur von 30° einstellen. Dies ist besonders dann von Bedeutung, wenn der Heizkörper beispielsweise sehr kompakte Ausmaße hat und nur eine sehr geringe Höhe, dagegen die Speicherkammer eine weitaus größere Höhe und so oberhalb des Heizkörpers auch eine wesentliche Abstrahlfläche in den Raum ausbildet.

Nachstehend ist die Erfindung des weiteren anhand der beigefügten Zeichnung, die jetzt lediglich ein Ausführungsbeispiel darstellt. Hierbei zeigt:
- Fig. 1: eine Draufsicht, teilweise geschnitten, eines Plattenheizkörpers mit einer wandseitig angebrachten Speicherkammer mit Latentwärmespeichermaterial;
- Fig. 2: eine perspektivische Ansicht der Anordnung gemäß Fig. 1;
- Fig. 3: eine schematische Darstellung in der Draufsicht eines gekrümmten ausgebildeten, heizwendelartigen Heizkörpers mit einer vorder- und rückseitig angeordneten Speicherkammer mit Latentwärmespeichermaterial;
- Fig. 4: eine perspektivische Ansicht der Anordnung gemäß Fig. 3.

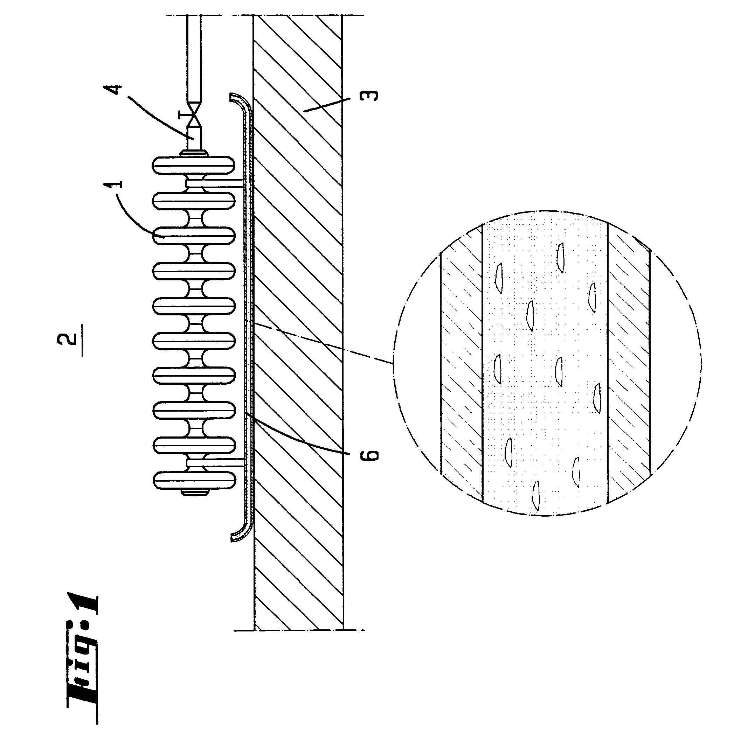

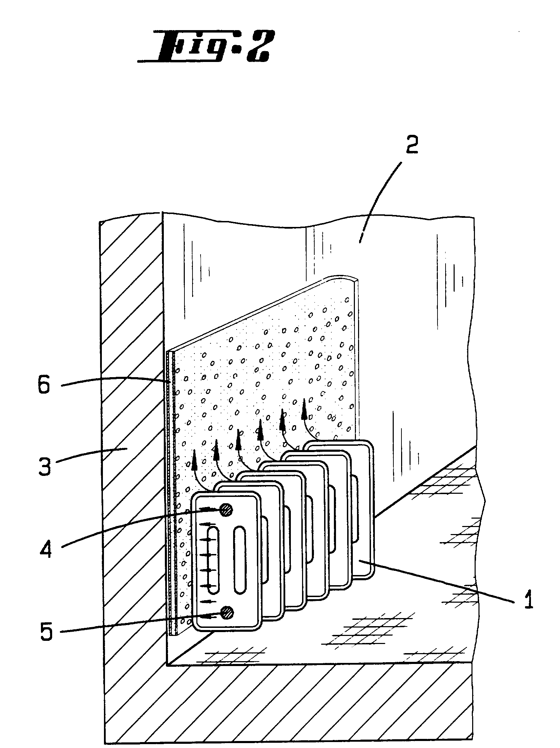

Dargestellt ist, zunächst mit Bezug zur Fig. 1, die Anordnung eines üblichen Heizkörpers 1 in einem Raum 2 vor einer Wand 3. Der Heizkörper 1 ist über Anschlüsse 4, 5 (vgl. auch Fig. 2) mit dem Vor- bzw. Rücklauf einer üblichen Hausheizung verbunden.

Wandseitig bezüglich des Heizkörpers 1 ist eine Speicherkammer 6 angeordnet, die mit Latentwärmespeichermaterial gefüllt ist. Das Latentwärmespeichermaterial besitzt eine Betriebstemperatur, die bei ca. 30° C liegt, während der Heizkörper 1 eine übliche Betriebstemperatur von 60° C aufweist. Zwischen der Speicherkammer 6 und dem Heizkörper 1 ist ein Abstand a ausgebildet. Daher steht die Speicherkammer 6 im wesentlichen in einem Strahlungswärmeaustausch bezüglich des Heizkörpers 1. Darüber hinaus findet aber auch ein konvektiver Wärmeübergang statt.

Wie weiter in Fig. 2 dargestellt ist, überragt die Speicherkammer 6 den Heizkörper 1 höhenmäßig deutlich, kann aber auch nach unten tiefer gezogen sein als der Heizkörper 1. Damit ist zunächst eine sehr wesentliche Strahlungsabschirmung des Heizkörpers 1 bezüglich der Wand 3 erreicht. Aufgrund der in der Speicherkammer 6 üblicherweise nur herrschenden geringen Temperatur von ca. 30° ist der Wärmeverlust zu der Wand 3 hin deutlich reduziert. Darüber hinaus strahlt die Speicherkammer 6 aber auch Wärme in den Raum 2 zurück. Insbesondere in dem Bereich, in welchem sie den Heizkörper 1 überragt. Zugleich wird die zurückgestrahlte Wärme von sich in dem Raum 2 aufhaltenden Personen als relativ behaglich empfunden, aufgrund des niedrigen Temperaturniveaus.

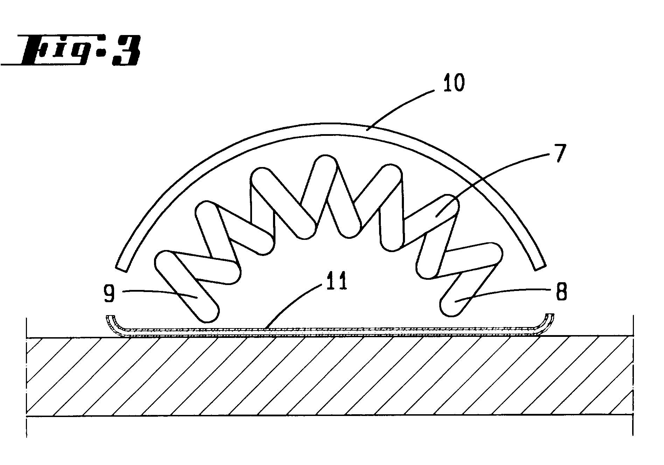

In Fig. 3 ist ein Heizkörper 7 schematisch dargestellt, der nicht nur durch ein wendelartiges Rohr gekennzeichnet ist, sondern darüber hinaus ist dieses Rohr auch noch an einer gekrümmten Linie zwischen dem vorderen Anschluß 8 und dem hinteren Anschluß 9 orientiert.

Raumseitig bezüglich des Heizkörpers 7 ist eine Speicherkammer 10 angeordnet, die in Anpassung an die gekrümmte Ausbildung des Heizkörpers 7 gleichfalls sphärisch gekrümmt ist. Dagegen ist rückseitig, zugeordnet zu der Wand 3 eine Speicherkammer 11 vorgesehen.

Des weiteren ist die Speicherkammer 10 aus einem transparenten Material gefertigt. Hierdurch wird auch gleichsam optisch erkennbar, wann die Speicherkammer 10 ihre übliche Betriebstemperatur erreicht hat. Bei dieser Temperatur ist darüber hinaus noch gegeben, daß nur ein Teil des sich in der Speicherkammer 10 befindlichen Latentwärmespeichermaterials auf Paraffinbasis in einem verflüssigten Zustand befindet, ein weiterer Teil sich aber im kristallinen verfestigten Zustand befindet. Dies ist auch durch die Lupendarstellung in Fig. 1 angedeutet. Festteile 12 des Latentwärmespeichermaterials schwimmen in flüssigem Latentwärmespeichermaterial. Insbesondere bei geeigneter Beleuchtung geben sich hier sehr vorteilhafte optische Effekte. Es kommt weiter hinzu, daß das Latentwärmespeichermaterial in der Speicherkammer 10 eingefärbt ist. Die Einfärbung kann in Anpassung an die Farbgestaltung der jeweiligen Wohnung vorgenommen sein. Bspw. ist eine rötliche oder bräunliche Einfärbung möglich.

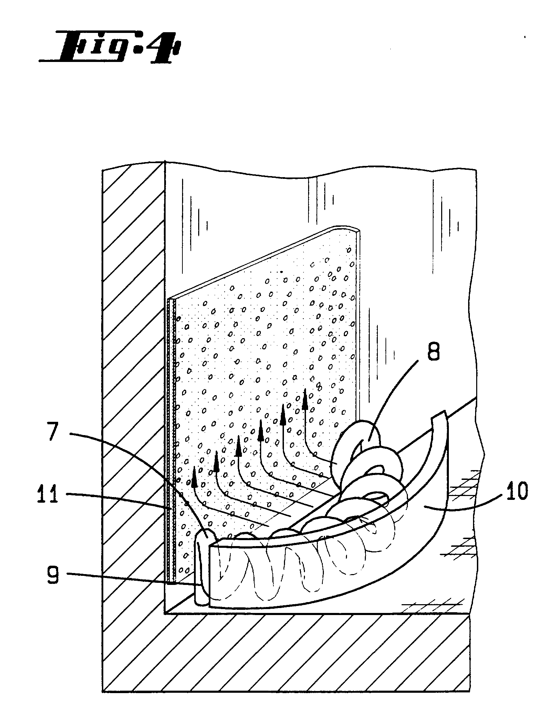

Aus der Darstellung der Fig. 4 ist zu entnehmen, daß die Transparenz der Speicherkammer 10 eine Durchsicht auf den Heizkörper 7 zuläßt. Auch die Speicherkammer 11 kann hinsichtlich Ihrer Wandung transparent ausgebildet sein.

## Patentansprüche

1. Heizkörper (1, 7) zur Anbringung in einem Wohnraum (2) mit einer Konvektionsfläche und, bspw. im Falle eines Heizkörpers für eine Warmwasserheizung, mit einer eine Einström- und eine Ausströmöffnung aufweisenden Wasserkammer, und einer gesonderten, abgeschlossenen Speicherkammer (6, 10, 11), in welcher sich ein Latentwärmespeichermaterial befindet, wobei die Speicherkammer (6, 10, 11) zu dem Heizkörper so beabstandet ist, daß sie in einem Strahlungswärmeaustausch mit dem Heizkörper (1, 7) steht und das Latentwärmespeichermaterial eine Phasenübergangstemperatur von bspw. 30° C aufweist, die deutlich unterhalb einer üblichen Betriebstemperatur des Heizkörpers liegt.

2. Heizkörper nach Anspruch 1, dadurch gekennzeichnet, daß die Speicherkammer (6) den Heizkörper (1) höhenmäßig überragt.

3. Heizkörper nach einem oder beiden der vorhergehenden Ansprüche, dadurch gekennzeichnet, daß die Speicherkammer (6) tiefer gezogen ist als der Heizkörper (1).

4. Heizkörper nach einem oder mehreren der vorhergehenden Ansprüche, dadurch gekennzeichnet, daß eine Speicherkammer (6) raumseitig bezüglich des Heizkörpers (1) angeordnet ist.

5. Heizkörper nach einem oder mehreren der vorhergehenden Ansprüche, dadurch gekennzeichnet, daß die Speicherkammer (6) sphärisch gekrümmt ist.

6. Heizkörper nach einem oder mehreren der vorhergehenden Ansprüche, dadurch gekennzeichnet, daß die Speicherkammer (6, 10, 11) aus einem transparenten Material besteht.

7. Heizkörper nach einem oder mehreren der vorhergehenden Ansprüche, dadurch gekennzeichnet, daß das Latentwärmespeichermaterial eingefärbt ist.

8. Heizkörper nach einem oder mehreren der vorhergehenden Ansprüche, dadurch gekennzeichnet, daß das Latentwärmespeichermaterial hinsichtlich seiner Phasenübergangstemperatur so eingestellt ist, daß bei einer üblichen Betriebstemperatur der Speicherkammer (6, 10, 11) ein Teil des Latentwärmespeichermaterials geschmolzen ist und ein Teil in fester Form vorliegt.

9. Heizkörper nach Anspruch 6, dadurch gekennzeichnet, daß das Latentwärmespeichermaterial leicht eingefärbt, aber immer noch transparent ist.

10. Heizkörper nach Anspruch 6, dadurch gekennzeichnet, daß das Latentwärmespeichermaterial so stark eingefärbt ist, daß es nicht mehr durchscheinend ist.

## Claims

1. A heater (1, 7) ) for fitting in a living room (2), the heater having a convection surface and, for example in the case of a heater for heating by means of hot water, a water chamber which has an in-flow opening and and out-flow opening, and a separate closed storage chamber (6, 10, 11), in which there is a latent heat storage material, the storage chamber (6, 10, 11) being spaced from the heater so that it is in a radiant heat exchange relationship with the heater (1, 7) and the latent heat storage material having a phase transition temperature of for example 30°C, which lies clearly below a normal operating temperature of the heater.

2. A heater according to Claim 1, characterised in that the storage chamber (6) projects above the heater (1) in respect of its height.

3. A heater according to one or both of the preceding claims, characterised in that the storage chamber (6) is brought below the the heater (1).

4. A heater according to one or more of the preceding claims, characterised in that a storage chamber (6) is located on the room side with respect to the heater (1).

5. A heater according to one or more of the preceding claims, characterised in that the storage chamber (6) is curved in a spherical manner.

6. A heater according to one or more of the preceding claims, characterised in that the storage chamber (6, 10, 11) consists of a transparent material.

7. A heater according to one or more of the preceding claims, characterised in that the latent heat storage material is coloured.

8. A heater according to one or more of the preceding claims, characterised in that the latent heat storage material is adjusted in regard to its phase transition temperature so that for a normal operating temperature of the storage chamber (6, 10, 11), part of the latent heat storage material has melted and part remains in solid form.

9. A heater according to Claim 6, characterised in that the latent heat storage material is slightly coloured, but is always still transparent.

10. A heater according to Claim 6, characterised in that the latent heat storage material is so strongly coloured that it is no longer transparent.

## Revendications

1. Corps chauffant (1, 7) pour montage dans un local d'habitation (2), avec une surface de convection et, par exemple en cas de corps chauffant pour un chauffage à l'eau chaude, avec une chambre à eau présentant une ouverture d'entrée et une ouverture de sortie, et une chambre d'accumulation (6, 10, 11) fermée, séparée, dans laquelle se trouve un matériau accumulateur de chaleur latente, la chambre d'accumulation (6, 10, 11) étant espacée du corps chauffant, de manière qu'elle soit en échange de chaleur rayonnante avec le corps chauffant (1, 7) et que le matériau accumulateur de chaleur latente présente une température de transition de phase de, par exemple, 30°C, qui est située nettement au-dessous d'une température de service habituelle du corps chauffant.

2. Corps chauffant selon la revendication 1, caractérisé en ce que la chambre d'accumulation (6) dépasse en hauteur le corps chauffant (1).

3. Corps chauffant selon l'une ou les deux des revendications précédentes, caractérisé en ce que la chambre d'accumulation (6) est déployée plus profondément que le corps chauffant (1).

4. Corps chauffant selon l'une ou plusieurs des revendications précédentes, caractérisé en ce qu'une chambre d'accumulation (6) est disposée du côté du local par rapport au corps chauffant (1).

5. Corps chauffant selon l'une ou plusieurs des revendications précédentes, caractérisé en ce que la chambre d'accumulation (6) est incurvée de façon sphérique.

6. Corps chauffant selon l'une ou plusieurs des revendications précédentes, caractérisé en ce que la chambre d'accumulation (6, 10, 11) est constituée d'un matériau transparent.

7. Corps chauffant selon l'une ou plusieurs des revendications précédentes, caractérisé en ce que le matériau accumulateur de chaleur latente est coloré.

8. Corps chauffant selon l'une ou plusieurs des revendications précédentes, caractérisé en ce que le matériau accumulateur de chaleur latente est réglé du point de vue de sa température de transition de phase, de telle manière que, pour une température de service habituelle de la chambre d'accumulation (6, 10, 11), une partie du matériau accumulateur de chaleur latente soit fondue et qu'une partie se présente sous forme solide.

9. Corps chauffant selon la revendication 6, caractérisé en ce que le matériau accumulateur de chaleur latente est légèrement coloré, mais est encore toujours transparent.

10. Corps chauffant selon la revendication 6, caractérisé en ce que le matériau accumulateur de chaleur latente est si fortement coloré qu'il n'est plus transparent.
